# EUROPEAN PATENT SPECIFICATION

(11) **EP 3 168 139 B1**
(45) Date of publication and mention of the grant of the patent: **10.01.2018**
(21) Application number: 15193811.5
(22) Date of filing: 10.11.2015
(51) Int. Cl.: B64C 1/14, E05B 15/00

(54) **AIRCRAFT DOOR ASSEMBLY**
FLUGZEUGTÜRANORDNUNG
ENSEMBLE PORTE D'AÉRONEF

(43) Date of publication of application: 17.05.2017
(73) Proprietor: Airbus Operations GmbH, 21129 Hamburg (DE)
(72) Inventor: ERBEN, Johann Konrad, 21129 Hamburg (DE)
(74) Representative: Isarpatent

(56) References cited:
- GB-A- 2 361 743
- US-A- 4 944 473

## Description

The present invention relates to a door assembly, specifically for outwardly opening plug-type or hinge-type aircraft doors, for example for use as overwing exits (OWE) in passenger aircraft.

Although the invention is explained and discussed in conjunction with a hinge-type aircraft door, the principles of the invention may easily be transferred to other types doors as well, for example coach doors, trolleybus doors, train doors, freight containers, isolating doors for refrigerating chambers or vehicles or similar.

Self-sealing doors such as coach doors, trolleybus doors, train doors, isolating doors for refrigerating chambers or vehicles or aircraft doors may employ so-called plug-type doors which are designed to seal itself in the door frame by taking advantage of a pressure difference, for example between an aircraft cabin on the inside and the atmosphere around the aircraft in flying altitude on the outside. The pressurization forces the door body into the door frame which may be inversely wedge-shaped or which may include stop members at or around the door jamb that match corresponding door stop members arranged around the outer circumference of the door body. The higher pressure on the inside exerts a force onto the seating of the door body within the door frame or onto the bearing surfaces of the corresponding stop members and retains the door within the door frame, preventing the door from springing open until after release of the pressure or other active deployment of the door.

Those pressure-induced loads need to be redirected into the door frame and, subsequently, into the surrounding structures, such as the fuselage of an aircraft. Since the pressure-induced loads act substantially perpendicularly to the door body, for example from within the aircraft towards outboard of the aircraft, a conventional door structure may include bearing members in the form of rails or beams at the door jamb that may be spaced apart in different horizontal planes along the width of the door body and fixedly connected to the fuselage structure.

Document US 5,636,814 A discloses an aircraft door structure having a clutch for an interior latch linkage of a plug-type door. The clutch is secured by an over-center mechanism to ensure that forces acting in opening direction on the latch will keep the latch at a fixed stop. Document US 5,823,473 A discloses a latch-lock mechanism for an airplane cargo door including straight-through drive shafts rotated by a common powered drive unit, and pull-in hooks co-acting with pull-in pins affixed to the fuselage of the airplane adjacent to the sides of the cargo door opening to pull the cargo door into a closed position. Further technical background is known from US4944473 and GB2361743 which refer to latch mechanisms for aircraft doors. There is, however, a need for improvements in door structures, particularly for aircraft, which require less installation space and are more convenient in operation, while at the same time retaining the ability to effectively transfer pressure-induced loads into the surrounding door frame structures.

This need is met by a door assembly having the features of claim 1, an aircraft having the features of claim 10, and a method for operating a door assembly having the features of claim 13.

A first aspect of the disclosure pertains to a door assembly comprising a door frame, a door having a door body hingedly installed in the door frame, at least one door latch connected to an edge of the door body or the door frame, the door latch having a latch fulcrum and a latch lever and being configured to pivot around a pivot axis around the latch fulcrum running parallel to the edge of the door body, and at least one hook member attached to the door frame or the edge of the door body, respectively, the hook member being configured to catch the door latch in hooking engagement, to retain the door latch in a direction perpendicular to the door body and to allow pivoting movement of the door latch out of the hooking engagement around the pivot axis. A bistable latch linkage is hingedly connecting the latch lever to the door body or the door frame. The bistable latch linkage may take on a spring-actuated overcenter position in which the pivoting movement of the door latch out of the hooking engagement with the hook member is blocked and a deadcenter position in which the latch lever is pivoted in an opposite direction to the pivoting movement of the door latch out of the hooking engagement with the hook member. This motion moves the door initially against the opening direction.

According to a second aspect of the disclosure, an aircraft comprises a door assembly according to the first aspect of the disclosure, particularly for an overwing exit of the aircraft.

According to a third aspect of the disclosure, a method for operating a door assembly, particularly a door assembly according to the first aspect of the disclosure of an aircraft according to the second aspect of the disclosure, comprises actuating the bistable latch linkage from the overcenter position to the deadcenter position to pivot the latch lever in at least partially deeper hooking engagement with the hook member, and actuating the bistable latch linkage over the deadcenter position to pivot the latch lever out of the hooking engagement with the hook member again.

The idea on which the present invention is based is to provide a latch and hook mechanism for a door body within a door frame that has a latch connected to the door body engage with a hook member connected to the door frame (or vice versa). The latch and hook mechanism essentially blocks an outboard linear motion of the latch perpendicular to the door body, but in principle allows for a pivoting movement of the latch within the hook member. By connecting a bistable latch linkage that is brought into an overcenter position to the latch, any force acting in outboard direction will be blocked by bistable latch linkage. In order to unlatch the latch and hook mechanism, the bistable latch linkage will first need to be brought in a direction opposite to the outboard direction into a deadcenter position where the latch is actually brought even deeper into hooking engagement with the hook member. This ensures that the latch and hook mechanism will only unhook, if a counterforce to the pressure-induced loads acting on the door will be actively exerted on the door assembly, so that the door assembly will be innately secure against accidental unlatching by normally occurring loads.

According to an embodiment of the door assembly, the latch linkage may comprise a kinematic chain of a 2-bar linkage with a centre joint. In a further embodiment, the door assembly may further comprise a latch linkage stop member fixedly connected to the door body and configured to unidirectionally block the centre joint of the 2-bar linkage in the overcenter position. Particularly, the latch linkage stop member may be configured to unidirectionally block the centre joint of the 2-bar linkage in a direction perpendicular to the door body. Such an overcenter lock is an advantageous mechanism for limiting travel of the 2-bar linkage in one direction so that it can just pass the centreline between the end pivots. Particularly advantageous is the fact that the overcenter position guarantees a higher locking force, the more linear counterforce is applied to the linkage. An unlatching motion may then simply involve moving the center point to the opposite side of the stop member, thereby cause in the innate weight acting on the 2-bar linkage to easily force the overcenter lock open.

According to another embodiment of the door assembly, the door latch may further comprise an arresting notch formed off-center to the latch fulcrum. In one embodiment, the door assembly may comprise a detent having a detent pivot engaging with the arresting notch of the door latch in a locked position. In a particular embodiment, a detent linkage is then fixedly connected to the detent and configured to swivel the detent pivot in and out of engagement with the arresting notch of the door latch. Such a detent linkage may advantageously also comprise a kinematic chain of a 2-bar linkage with a centre joint, similar to the latch linkage.

According to an embodiment of the aircraft, the aircraft may further comprise a monitoring system that is connected to the door assembly. The monitoring system may monitor the state of the latching and locking components of the door assembly. If the operational state of the door assembly fails to correspond to an expected state, for example if the latching and locking of the door assembly cannot be performed as required for the security of the aircraft, the monitoring system is configured to prevent ventilation of pressurization of the aircraft. The monitoring system may for example include vent flaps and/or sensor controlled or computer logic controlled air conditioning systems.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
Fig. 1 schematically illustrates a door body of an aircraft door assembly according to an embodiment of the invention.
Fig. 2 schematically illustrates a side view of the latch and hook mechanism of an aircraft door assembly according to a further embodiment of the invention.
Fig. 3 schematically illustrates details of the side view of the latch and hook mechanism of Fig. 2 in an unlocked operational state according to a further embodiment of the invention.
Fig. 4 schematically illustrates details of the side view of the latch and hook mechanism of Fig. 2 in an unlocked operational state according to a further embodiment of the invention.
Fig. 5 schematically illustrates details of the side view of the latch and hook mechanism of Fig. 2 during an unlatching motion according to a further embodiment of the invention.
Fig. 6 schematically illustrates details of the side view of the latch and hook mechanism of Fig. 2 in an unlatched operational state according to a further embodiment of the invention.
Fig. 7 schematically illustrates stages of a method for operating an aircraft door assembly according to another embodiment of the invention.
Fig. 8 schematically illustrates an aircraft having at least one aircraft door assembly according to yet a further embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

The following detailed explanation is directed towards door assemblies for use in aircraft, such as overwing exits (OWE) in passenger aircraft, but the guiding principles of the invention may be used for other applications as well, such as door assemblies for coaches, trolleybuses, trains, freight containers or isolating doors for refrigerating chambers or vehicles.

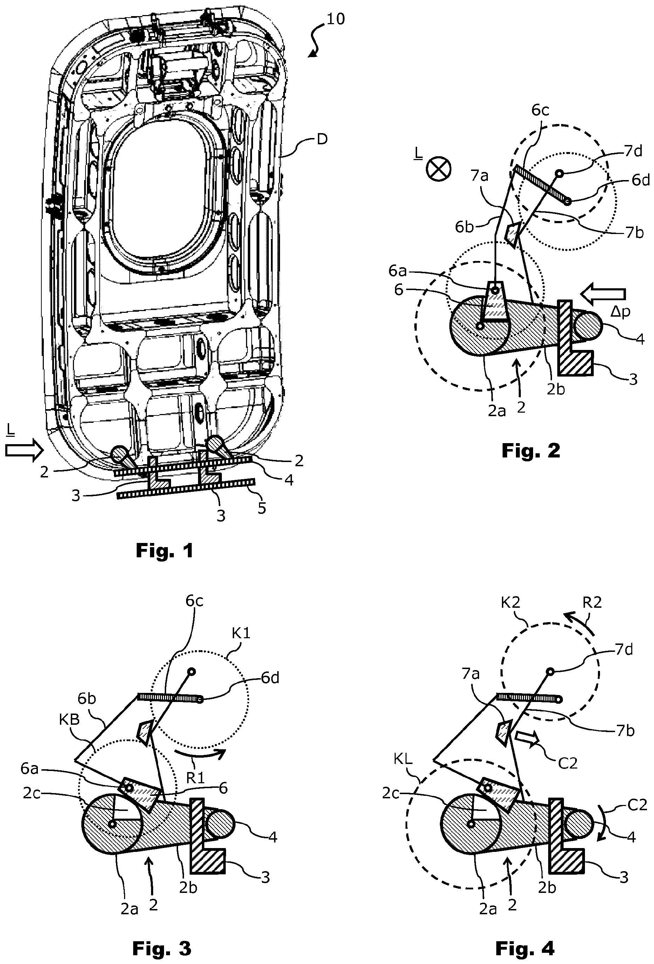

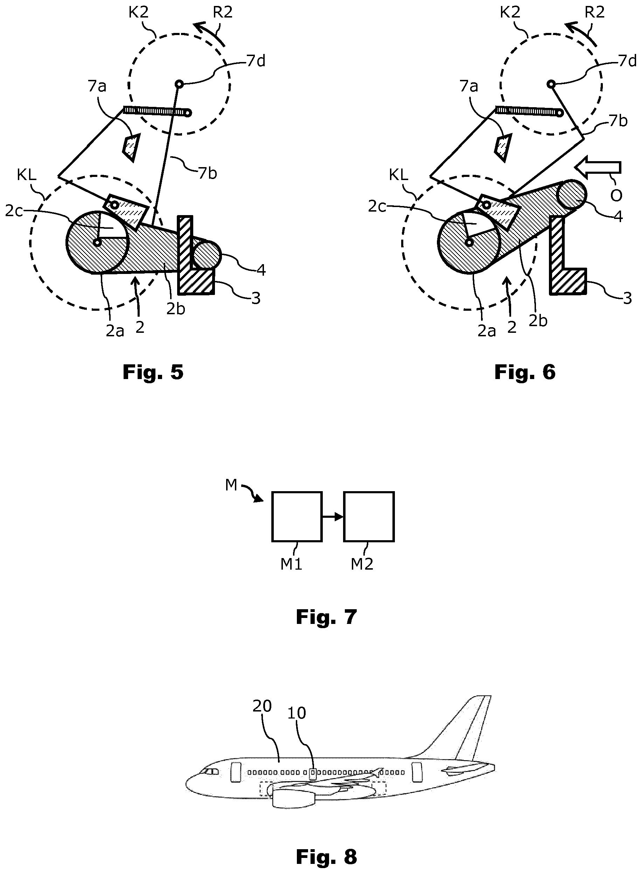

Fig. 1 shows a schematic illustration of a door assembly 10 as it may be employed in an aircraft, particularly a passenger aircraft. The view on the door assembly 10 is exemplarily shown as seen from the inside of a cabin in a passenger aircraft with the linings removed. Fig. 8 exemplarily depicts an aircraft 20 comprising such a door assembly 10 as explained and described in conjunction with Figs. 1 to 6. The door assembly 10 may be used as overwing exit (OWE) in passenger aircraft, but it may be equally possible to equip other exits of the aircraft 20 with the door assemblies 10 as well.

The door assembly 10 generally includes a door D having a door body which may be hinged on the top side to provide for an outwardly opening door within a door frame of the door assembly 10. The upper hinge on the top side may be spring-loaded against the door frame and may be designed to take a portion of the loads in outboard direction, but no circumferential or fuselage loads. The pivoting motion of the outwardly opening door D around the top side hinge may be power assisted by means of suitable hydraulically, pneumatically and/or electrically driven actuators that may be designed to provide enough power to keep the door in operation for a minimum of time, such as for example for at least two seconds, even under adverse conditions.

To secure the door D in its closed state, for example during flight, taxi, take-off and/or landing of the aircraft, the door D may be equipped with one or more door latches 2 on the bottom edge. For purposes of illustration, only bottom side door latches 2 are schematically illustrated in Fig. 1, however, it should be understood that side edge door latches 2 on either or both side edges of the door D may be arranged additionally or alternatively in an analogous manner. The number of door latches 2 is only exemplarily shown as two, but there may be any other number of door latches 2 provided, depending on application, size, weight and security level of the door assembly 10.

The door latches 2 may be used to engage with hook members 3 connected to the door surrounding. For example, the hook members 3 may be commonly coupled by a hook shaft 5 fixedly connected to the fuselage structure of the aircraft. The number of hook members 3 is only exemplarily shown as two, but there may be any other number of hook members 3 provided, depending on application, size, weight and security level of the door assembly 10. The door latches 2 may for example be mechanically coupled by means of a latch shaft 4 that provides a lateral load transfer into the hook members 3 the positioning and arrangement of which may then be laterally displaced with respect to the positioning and arrangement of the door latches 2. The latch shaft 4 hooks into the hook members 3, thereby securing the door D from opening when outboard facing forces are exerted on the door. The latch shaft 4 may in particular be actuated by a common latch drive and may be designed to take outboard facing loads due to pressure differences between the inside and the outside of the aircraft. Each of the door latches 2 may also be individually lockable and each of the door latches 2 may be monitored by an individual latching/locking sensor monitoring the correct operation and proper latching/locking state of the associated door latch 2.

Of course, the door latches 2 and the hook members 3 may be installed inversely, i.e. the hook members 3 may be connected to the door body and the door latches 2 may be connected to the door frame. In that case, the mechanism for actuating the door latches 2 needs to be installed in the surrounding of the door, for example at the fuselage of an aircraft.

Figs. 2 to 6 illustrate various degrees of detail of the latch and hook mechanism of the door assembly 10 provided by the door latches 2, the hook members 3 and the latch shaft 4. In Figs. 2 to 6, the view is depicted as seen from the side, generally indicated by the reference sign "L" in Fig. 1 and in Figs. 2 to 6. While Fig. 2 depicts a structural overview over the various mechanical components of the latch and hook mechanism of the door assembly 10, Figs. 3 to 6 illustrate various operational stages of the latch and hook mechanism of the door assembly 10 during unlatching and unlocking of the door D.

The door latch 2 includes a latch fulcrum 2a with a latch lever 2b attached thereto. The latch lever 2b may be connected to the latch shaft 4 at its far end which may be brought into hooking engagement with the hook member 3. Of course, it may also be possible to form the latch lever 2b with an angled end portion as latching member for the hook member 3, so that the need for a latch shaft 4 may be obviated. The latch lever 2b is configured to pivot around a pivot axis in the center of the latch fulcrum 2a. This pivot axis is running parallel to the edge of the door body or the door frame to which the door latch 2 is secured.

By pivoting the door latch 2 around its fulcrum 2a, the latch shaft 4 (or the hooking end portion of the lever 2b, as the case may be) is brought into hooking engagement with the hook member 3. In the locked state - as illustrated in Fig. 2 - the latch shaft 4 and the hook member 3 provide a stop against outboard facing forces, such as pressure-induced loads Δp. The hook member 3 is configured to catch the door latch 2 in hooking engagement, thereby retaining the door latch 2 in a direction perpendicular to the door body, In order to release the hooking engagement, the latch lever 2b needs to be swivelled upwardly in a pivoting movement of the door latch 2 out of the hooking engagement around the pivot axis.

A latch linkage 7b hingedly connects the latch lever 2b to the door or the door frame. The latch linkage 7b may for example comprise a kinematic chain of a 2-bar linkage with a center joint. The latch linkage 7b forms a bistable linkage mechanism that has a release position, a deadcenter position and an opposite overcenter position. Fig. 2 displays the latch linkage 7b in its overcenter position in which the 2-bar linkage is overstretched over its center joint. A latch linkage stop member 7a may be fixedly connected to the door body or the door frame. The latch linkage stop member 7a provides a block against further lateral displacement of the center joint of the 2-bar linkage in the overcenter position.

The overcenter position of the bistable latch linkage 7b may be spring-actuated so that the pivoting movement of the door latch 2 out of the hooking engagement with the hook member 3 is blocked when a simple linear force in the direction normal to the door body is exerted in an outboard direction on the latch linkage 7b or if the latch linkage 7b is disconnected from the mechanism, for example in case of fractured, breaking or otherwise mechanically failing components of the mechanism.

The door latch 2 may further comprise an arresting notch 2c that is formed off-center to the latch fulcrum 2a. The arresting notch 2c is formed in such a shape that a detent 6 with a detent pivot 6a may engage with the arresting notch 2c of the door latch 2 to keep the lever 2b in a locked position. A detent linkage 6b may be fixedly connected to the detent 6, for example a kinematic chain of a 2-bar linkage with a center joint as well. The detent linkage 6b allows the detent 6 to be swivelled around the detent pivot 6a in and out of engagement with the arresting notch 2c of the door latch 2. The detent linkage 6b may also comprise an overcenter mechanism where the locked position of the detent 6 is kept in place by bringing the detent linkage 6b into the (possibly spring-actuated) overcenter position. A force acting in outboard direction on the detent linkage 6b will therefore not be able to swivel the detent out of its locking engagement with the arresting notch 2c.

The overcenter position of the bistable detent linkage 6b may be spring-actuated so that the detent 6 may stay in the arresting notch 2c if disconnected from the mechanism, for example in case of fractured, breaking or otherwise mechanically failing components of the mechanism.

Fig. 3 illustrates the operational state of the latch and hook mechanism in which the detent 6 is unlocked. To do so, the detent linkage 6b is moved out of its locking position, for example by pivoting a detent linkage lever 6c around a detent linkage lever fulcrum 6d with the detent linkage lever 6c following an unlocking motion R1 within the detent linkage range of motion K1. By translating the motion of the detent linkage lever 6c via the detent linkage 6b, the detent 6 pivots around the detent fulcrum 6a in a circular detent range of motion KB. After having been pivoted, the detent 6 is moved completely out of the arresting notch 2c and thus no longer blocks movement of the door latch 2.

Fig. 4 illustrates the operational state of the latch and hook mechanism after the detent 6 has been unlocked. In order to unlatch the door latch 2, the latch linkage 7b needs to be actuated in an unlatching motion R2 within a range of motion K2 around a latch linkage fulcrum 7d at which the end joint opposite to the joint where the latch linkage 7b is connected to the lever 2b is pivotably fixed. The turning unlocking motion R2 forces the center joint that has previously rested against the latch linkage stop member 7a in its first stable overcenter position into a tipping motion C2. This tipping motion C2 moves the latch linkage 7b out of its overcenter position towards the deadcenter position of the bistable mechanism. By virtue of the tipping motion C2, the latch lever 2b is at first pushed downwards into deeper hooking engagement with the hook member 3 as indicated by the arrow and the reference sign "C2" at the latch shaft 4, i.e. the door D is initially moved against its opening direction and inwards.

Fig. 5 illustrates the operational state of the latch and hook mechanism after the latch linkage 7b has been moved out of its overcenter position into the deadcenter position. In the deadcenter position, the 2-bar linkage is fully linearly stretched and the lever 2b is pushed to a maximum into the hooking engagement with the hook member 3. This movement may move the door D against the opening direction and against the pressure-induced loads Δp if the aircraft is pressurized due to the geometry of the interface.

After this initial movement of the latch linkage 7b in a direction opposite to the normally acting pressure-induced loads, the door latch 2 may then be easily pivoted out of the hooking engagement with the hook member by further following the unlatching motion R2 within the latch range of motion KL. As depicted in Fig. 6, the latch and hook mechanism may be released by tilting the latch linkage 7b into its second stable release position. Once the latch shaft 4 or the hooking end portion of the door latch lever 2b has been pivoted far enough upwards, the door may be opened in an opening motion O. This opening motion O may for example be performed under power-assistance, for example by a mechanically pre-loaded spring mechanism, a motor or a hydraulic, pneumatic and/or electric drive mechanism. The door may then swing open, for example around the hinge at the top edge of the door.

Fig. 7 schematically illustrates stages of a method M for operating a door assembly, for example a door assembly 10 as explained in conjunction with Figs. 1 to 6. The method M may be specifically used for operating door assemblies 10 on board of an aircraft, such as the aircraft 20 as depicted in Fig. 8.

In a first stage M1, the method M involves actuating the bistable latch linkage 7b from the overcenter position to the deadcenter position to pivot the latch lever 2b in at least partially deeper hooking engagement with the hook member 3. After this unlatching motion, the method M involves in a second stage M2 actuating the bistable latch linkage 7b over the deadcenter position to pivot the latch lever 2b out of the hooking engagement with the hook member 3 again.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 2: Door latch
- 2a: Latch fulcrum
- 2b: Latch lever
- 2c: Arresting notch
- 3: Hook member
- 4: Latch shaft
- 5: Hook shaft
- 6: Detent
- 6a: Detent pivot
- 6b: Detent linkage
- 6c: Detent linkage lever
- 6d: Detent linkage lever fulcrum
- 7a: Latch linkage stop member
- 7b: Latch linkage
- 7d: Latch linkage pivot
- 10: Door assembly
- 20: Aircraft
- C2: Tipping motion
- D: Door
- K1: Detent linkage range of motion
- K2: Latch linkage range of motion
- KB: Detent range of motion
- KL: Latch range of motion
- L: Side viewing direction
- M: Method
- M1: Method step
- M2: Method step
- O: Door opening motion
- R1: Unlocking motion
- R2: Unlatching motion
- Δp: Pressure-induced load

## Claims

1. Door assembly (10), comprising:
a door frame;
a door (D) having a door body hingedly installed in the door frame;
at least one door latch (2) connected to an edge of the door body or the door frame, the door latch (2) having a latch fulcrum (2a) and a latch lever (2b) and being configured to pivot around a pivot axis around the latch fulcrum (2a) running parallel to the edge of the door body or the door frame;
a bistable latch linkage (7b) hingedly connecting the latch lever (2b) to the door body or the door frame, the bistable latch linkage (7b) having a spring-actuated overcenter position in which the pivoting movement of the door latch (2) out of the hooking engagement with the hook member (3) is blocked and having a deadcenter position in which the latch lever (2b) is pivoted in an opposite direction to the pivoting movement of the door latch (2) out of the hooking engagement with the hook member (3), thereby moving the door (D) initially against the opening direction;
**characterised in that** the door assembly (10) further comprises:
at least one hook member (3) attached to the door frame or an edge of the door body, respectively, the hook member (3) being configured to catch the door latch (2) in hooking engagement, to retain the door latch (2) in a direction perpendicular to the door body and to allow pivoting movement of the door latch (2) out of the hooking engagement around the pivot axis.

2. Door assembly (10) according to claim 1, wherein the latch linkage (7b) comprises a kinematic chain of a 2-bar linkage with a centre joint.

3. Door assembly (10) according to claim 2, further comprising:
a latch linkage stop member (7a) fixedly connected to the door body and configured to unidirectionally block the centre joint of the 2-bar linkage in the overcenter position.

4. Door assembly (10) according to claim 3, wherein the latch linkage stop member (7a) is configured to unidirectionally block the centre joint of the 2-bar linkage in a direction perpendicular to the door body.

5. Door assembly (10) according to one of the claims 1 to 4, wherein the door latch (2) further comprises an arresting notch (2c) formed off-center to the latch fulcrum (2a).

6. Door assembly (10) according to claim 5, further comprising:
a detent (6) having a detent pivot (6a) engaging with the arresting notch (2c) of the door latch (2) in a locked position.

7. Door assembly (10) according to claim 6, further comprising:
a detent linkage (6b) fixedly connected to the detent (6) and configured to swivel the detent pivot (6a) in and out of engagement with the arresting notch (2c) of the door latch (2).

8. Door assembly (10) according to claim 7, wherein the detent linkage (6b) comprises a kinematic chain of a 2-bar linkage with a centre joint.

9. Door assembly (10) according to one of the claims 1 to 8, wherein the bistable latch linkage (7b) is power assisted by mechanical, hydraulic, pneumatic or electric actuation.

10. Aircraft (20), comprising an aircraft door with a door assembly (10) according to one of the claims 1 to 9.

11. Aircraft (20) according to claim 10, wherein the aircraft door is an overwing exit.

12. Aircraft (20) according to one of the claims 10 and 11, further comprising:
a monitoring system connected to the door assembly (10) and configured to prevent ventilation of pressurization of the aircraft (20) depending on the operational state of the door assembly (10).

13. Method (M) for operating a door assembly (10), the door assembly (10) comprising:
a door frame;
a door (D) having a door body hingedly installed in the door frame;
at least one door latch (2) connected to an edge of the door body, the door latch (2) having a latch fulcrum (2a) and a latch lever (2b) and being configured to pivot around a pivot axis around the latch fulcrum (2a) running parallel to the edge of the door body;
at least one hook member (3) attached to the door frame, the hook member (3) being configured to catch the door latch (2) in hooking engagement, to retain the door latch (2) in a direction perpendicular to the door body and to allow pivoting movement of the door latch (2) out of the hooking engagement around the pivot axis; and
a bistable latch linkage (7b) hingedly connecting the latch lever (2b) to the door body, the bistable latch linkage (7b) having a spring-actuated overcenter position in which the pivoting movement of the door latch (2) out of the hooking engagement with the hook member (3) is blocked and having a deadcenter position in which the latch lever (2b) is pivoted in an opposite direction to the pivoting movement of the door latch (2) out of the hooking engagement with the hook member (3),
the method comprising:
actuating (M1) the bistable latch linkage (7b) from the overcenter position to the deadcenter position to pivot the latch lever (2b) in at least partially deeper hooking engagement with the hook member (3); and
actuating (M2) the bistable latch linkage (7b) over the deadcenter position to pivot the latch lever (2b) out of the hooking engagement with the hook member (3) again.

## Patentansprüche

1. Türanordnung (10), umfassend:
einen Türrahmen;
eine Tür (D), die einen Türkorpus aufweist, der in dem Türrahmen angelenkt ist;
mindestens einen Türriegel (2), der mit einem Rand des Türkorpus oder des Türrahmens verbunden ist, wobei der Türriegel (2) einen Riegeldrehpunkt (2a) und einen Riegelhebel (2b) aufweist und dafür ausgebildet ist, um eine Schwenkachse um den Riegeldrehpunkt (2a), der parallel zu dem Rand des Türkorpus oder des Türrahmens verläuft, zu schwenken;
ein bistables Riegelgestänge (7b), das den Riegelhebel (2b) an dem Türkorpus oder dem Türrahmen anlenkt, wobei das bistable Riegelgestänge (7b) eine federbetätigte Schnappposition aufweist, in der die Schwenkbewegung des Türriegels (2) aus der Hakeneingriffnahme mit dem Hakenelement (3) heraus blockiert ist, und eine Totpunktposition aufweist, in welcher der Riegelhebel (2b) in eine Richtung geschwenkt ist, die der Schwenkbewegung des Türriegels (2) aus der Hakeneingriffnahme mit dem Hakenelement (3) heraus entgegengesetzt ist, wodurch die Tür (D) zunächst entgegen der Öffnungsrichtung bewegt wird;
**dadurch gekennzeichnet, dass** die Türanordnung (10) des Weiteren Folgendes umfasst:
mindestens ein Hakenelement (3), das an dem Türrahmen bzw. einem Rand des Türkorpus angebracht ist, wobei das Hakenelement (3) dafür ausgebildet ist, den Türriegel (2) in einer Hakeneingriffnahme zu fangen, den Türriegel (2) in einer Richtung senkrecht zu dem Türkorpus zu halten und eine Schwenkbewegung des Türriegels (2) aus der Hakeneingriffnahme heraus um die Schwenkachse zu erlauben.

2. Türanordnung (10) nach Anspruch 1, wobei das Riegelgestänge (7b) eine kinematische Kette eines Zweistangengestänges mit einer mittigen Verbindung umfasst.

3. Türanordnung (10) nach Anspruch 2, des Weiteren umfassend:
ein Riegelgestänge-Anschlagelement (7a), das fest mit dem Türkorpus verbunden ist und dafür ausgebildet ist, die mittige Verbindung des Zweistangengestänges unidirektional in der Schnappposition zu blockieren.

4. Türanordnung (10) nach Anspruch 3, wobei das Riegelgestänge-Anschlagelement (7a) dafür ausgebildet ist, die mittige Verbindung des Zweistangengestänges unidirektional in einer Richtung senkrecht zu dem Türkorpus zu blockieren.

5. Türanordnung (10) nach einem der Ansprüche 1 bis 4, wobei der Türriegel (2) des Weiteren eine Arretieraussparung (2c) umfasst, die außermittig zu dem Riegeldrehpunkt (2a) ausgebildet ist.

6. Türanordnung (10) nach Anspruch 5, des Weiteren umfassend:
eine Sperrklinke (6) mit einem Sperrklinkenschwenkpunkt (6a), welche die Arretieraussparung (2c) des Türriegels (2) in einer verriegelten Position in Eingriff nimmt.

7. Türanordnung (10) nach Anspruch 6, des Weiteren umfassend:
ein Sperrklinkengestänge (6b), das fest mit der Sperrklinke (6) verbunden ist und dafür ausgebildet ist, den Sperrklinkenschwenkpunkt (6a) in die und aus der Eingriffnahme mit der Arretieraussparung (2c) des Türriegels (2) zu schwenken.

8. Türanordnung (10) nach Anspruch 7, wobei das Sperrklinkengestänge (6b) eine kinematische Kette eines Zweistangengestänges mit einer mittigen Verbindung umfasst.

9. Türanordnung (10) nach einem der Ansprüche 1 bis 8, wobei das bistable Riegelgestänge (7b) durch eine mechanische, hydraulische, pneumatische oder elektrische Betätigungskraft unterstützt wird.

10. Flugzeug (20), das eine Flugzeugtür mit einer Türanordnung (10) nach einem der Ansprüche 1 bis 9 umfasst.

11. Flugzeug (20) nach Anspruch 10, wobei die Flugzeugtür ein Ausstieg über einem Tragflügel ist.

12. Flugzeug (20) nach einem der Ansprüche 10 und 11, des Weiteren umfassend:
ein Überwachungssystem, das mit der Türanordnung (10) verbunden ist und dafür ausgebildet ist, einen Kabinendruckverlust des Flugzeugs (20) in Abhängigkeit vom Betriebszustand der Türanordnung (10) zu verhindern.

13. Verfahren (M) zum Betätigen einer Türanordnung (10), wobei die Türanordnung (10) Folgendes umfasst:
- einen Türrahmen;
- eine Tür (D), die einen Türkorpus aufweist, der in dem Türrahmen angelenkt ist;
- mindestens einen Türriegel (2), der mit einem Rand des Türkorpus verbunden ist, wobei der Türriegel (2) einen Riegeldrehpunkt (2a) und einen Riegelhebel (2b) aufweist und dafür ausgebildet ist, um eine Schwenkachse um den Riegeldrehpunkt (2a), der parallel zu dem Rand des Türkorpus verläuft, zu schwenken;
- mindestens ein Hakenelement (3), das an dem Türrahmen angebracht ist, wobei das Hakenelement (3) dafür ausgebildet ist, den Türriegel (2) in einer Hakeneingriffnahme zu fangen, den Türriegel (2) in einer Richtung senkrecht zu dem Türkorpus zu halten und eine Schwenkbewegung des Türriegels (2) aus der Hakeneingriffnahme heraus um die Schwenkachse zu erlauben; und
- ein bistables Riegelgestänge (7b), das den Riegelhebel (2b) an dem Türkorpus anlenkt, wobei das bistable Riegelgestänge (7b) eine federbetätigte Schnappposition aufweist, in der die Schwenkbewegung des Türriegels (2) aus der Hakeneingriffnahme mit dem Hakenelement (3) heraus blockiert ist, und eine Totpunktposition aufweist, in welcher der Riegelhebel (2b) in eine Richtung geschwenkt ist, die der Schwenkbewegung des Türriegels (2) aus der Hakeneingriffnahme mit dem Hakenelement (3) heraus entgegengesetzt ist,
wobei das Verfahren Folgendes umfasst:
Betätigen (M1) des bistablen Riegelgestänges (7b) aus der Schnappposition in die Totpunktposition, um den Riegelhebel (2b) in eine mindestens teilweise tiefere Hakeneingriffnahme mit dem Hakenelement (3) zu schwenken; und
Betätigen (M2) des bistablen Riegelgestänges (7b) über die Totpunktposition, um den Riegelhebel (2b) wieder aus der Hakeneingriffnahme mit dem Hakenelement (3) heraus zu schwenken.

## Revendications

1. Ensemble porte (10) comprenant :
un cadre de porte ;
une porte (D) comportant un corps de porte monté articulé sur le cadre de porte ;
au moins un loquet de porte (2) relié à un bord du corps de porte ou du cadre de porte, le loquet de porte (2) comportant un point d'appui de loquet (2a) et un levier de loquet (2b) et étant conçu pour pivoter autour d'un axe de pivotement autour du point d'appui de loquet (2a) s'étendant parallèlement au bord du corps de porte ou du cadre de porte ;
une tringlerie de loquet bistable (7b) assurant la liaison articulée du levier de loquet (2b) au corps de porte ou au cadre de porte, la tringlerie de loquet bistable (7b) ayant une position d'arc-boutement actionnée par ressort, dans laquelle le mouvement pivotant du loquet de porte (2) hors de prise par accrochage avec l'élément d'accrochage (3) est bloqué, et ayant une position de point mort dans laquelle le levier de loquet (2b) pivote dans une direction opposée au mouvement de pivotement du loquet de porte (2) hors de prise par accrochage avec l'élément d'accrochage (3), ce qui permet de déplacer la porte (D) initialement à l'encontre de la direction d'ouverture ;
**caractérisé en ce que** l'ensemble porte (10) comprend en outre :
au moins un élément d'accrochage (3) fixé au cadre de porte ou à un bord du corps de porte, respectivement, l'élément d'accrochage (3) étant conçu pour attraper le loquet de porte (2) en le mettant en prise par accrochage, afin de retenir le loquet de porte (2) dans une direction perpendiculaire au corps de porte et de permettre le mouvement pivotant du loquet de porte (2) hors de prise par accrochage, autour de l'axe de pivotement.

2. Ensemble porte (10) selon la revendication 1, dans lequel la tringlerie de loquet (7b) comprend une chaîne cinématique de tringlerie à 2 barres, dotée d'une articulation centrale.

3. Ensemble porte (10) selon la revendication 2, comprenant en outre :
un élément de butée de tringlerie de loquet (7a) relié à demeure au corps de porte et conçu pour bloquer de manière unidirectionnelle l'articulation centrale de la tringlerie à 2 barres dans la position de point mort.

4. Ensemble porte (10) selon la revendication 3, dans lequel l'élément de butée de tringlerie de loquet (7a) est conçu pour bloquer de manière unidirectionnelle l'articulation centrale de la tringlerie à 2 barres, dans une direction perpendiculaire au corps de porte.

5. Ensemble porte (10) selon l'une des revendications 1 à 4, dans lequel le loquet de porte (2) comprend en outre un cran d'arrêt (2c) formé excentré par rapport au point d'appui de loquet (2a).

6. Ensemble porte (10) selon la revendication 5, comprenant en outre :
un ergot (6) comportant un pivot d'ergot (6a) entrant en prise avec le cran d'arrêt (2c) du loquet de porte (2) dans une position verrouillée.

7. Ensemble porte (10) selon la revendication 6, comprenant en outre :
une tringlerie d'ergot (6b) reliée à demeure à l'ergot (6) et conçue pour faire tourner le pivot d'ergot (6a) en le mettant en prise et hors de prise avec le cran d'arrêt (2c) du loquet de porte (2).

8. Ensemble porte (10) selon la revendication 7, dans lequel la tringlerie d'ergot (6b) comprend une chaîne cinématique de tringlerie à 2 barres, dotée d'une articulation centrale.

9. Ensemble porte (10) selon l'une des revendications 1 à 8, dans lequel la tringlerie de loquet bistable (7b) est assistée par commande mécanique, hydraulique, pneumatique ou électrique.

10. Aéronef (20) comprenant une porte d'aéronef dotée d'un ensemble porte (10) selon l'une des revendications 1 à 9.

11. Aéronef (20) selon la revendication 10, dans lequel la porte d'aéronef est une issue d'évacuation sur l'aile.

12. Aéronef (20) selon l'une des revendications 10 et 11, comprenant en outre :
un système de surveillance relié à l'ensemble porte (10) et conçu pour empêcher la ventilation de pressurisation de l'aéronef (20) en fonction de l'état opérationnel de l'ensemble porte (10).

13. Procédé (M) pour faire fonctionner un ensemble porte (10), l'ensemble porte (10) comprenant :
- un cadre de porte ;
- une porte (D) comportant un corps de porte monté articulé sur le cadre de porte ;
- au moins un loquet de porte (2) relié à un bord du corps de porte, le loquet de porte (2) comportant un point d'appui de loquet (2a) et un levier de loquet (2b) et étant conçu pour pivoter autour d'un axe de pivotement autour du point d'appui de loquet (2a) s'étendant parallèlement au bord du corps de porte ;
- au moins un élément d'accrochage (3) fixé au cadre de porte, l'élément d'accrochage (3) étant conçu pour attraper le loquet de porte (2) en le mettant en prise par accrochage, afin de retenir le loquet de porte (2) dans une direction perpendiculaire au corps de porte et de permettre le mouvement pivotant du loquet de porte (2) hors de prise par accrochage, autour de l'axe de pivotement ; et
- une tringlerie de loquet bistable (7b) assurant la liaison articulée du levier de loquet (2b) au corps de porte, la tringlerie de loquet bistable (7b) ayant une position d'arc-boutement actionnée par ressort, dans laquelle le mouvement pivotant du loquet de porte (2) hors de prise par accrochage avec l'élément d'accrochage (3) est bloqué, et ayant une position de point mort dans laquelle le levier de loquet (2b) pivote dans une direction opposée au mouvement de pivotement du loquet de porte (2) hors de prise par accrochage avec l'élément d'accrochage (3),
le procédé comprenant les étapes suivantes :
actionner (M1) la tringlerie de loquet bistable (7b) de la position d'arc-boutement à la position de point mort pour faire pivoter le levier de loquet (2b) en le mettant au moins en partie plus profondément en prise par accrochage avec l'élément d'accrochage (3) ; et
actionner (M2) la tringlerie de loquet bistable (7b) au-delà de la position de point mort pour faire pivoter le levier de loquet (2b) en le mettant de nouveau hors de prise par accrochage avec l'élément d'accrochage (3).
